# EUROPÄISCHE PATENTSCHRIFT

(11) **EP 2 049 444 B1**
(45) Veröffentlichungstag und Bekanntmachung des Hinweises auf die Patenterteilung: **19.10.2011**
(21) Anmeldenummer: 07765243.6
(22) Anmeldetag: 20.07.2007
(51) Int. Cl.: C02F 3/12, C02F 1/44

(54) **VERFAHREN UND VORRICHTUNG ZUR BIOLOGISCHEN ABWASSERREINIGUNG**
METHOD AND APPARATUS FOR BIOLOGICAL WASTEWATER PURIFICATION
PROCÉDÉ ET DISPOSITIF POUR L'ÉPURATION BIOLOGIQUE DES EAUX USÉES

(30) Priorität: 28.07.2006 DE 102006034984
(43) Veröffentlichungstag der Anmeldung: 22.04.2009
(73) Patentinhaber: Universität Kassel, 34125 Kassel (DE)
(72) Erfinder: FRECHEN, Franz-Bernd, 34128 Kassel (DE); SCHIER, Wernfried, 34131 Kassel (DE)
(74) Vertreter: Frese-Göddeke, Beate
(86) Internationale Anmeldenummer: PCT/EP2007/006462
(87) Internationale Veröffentlichungsnummer: WO 2008/012030

(56) Entgegenhaltungen:
- EP-A- 1 568 662
- EP-A1- 2 022 763
- FR-A- 2 844 784
- JP-A- 2003 080 287
- JP-A- 2005 349 327
- US-A1- 2002 011 438
- US-B1- 6 464 874
- K.-D. KUMMER, W.F. GEIGER: "Stabilization of Activated Sludge Processes During Wet Weather Flow Through Microsieving", WATER SCIENCE AND TECHNOLOGY, vol. 29, no. 1-2, 1994, pages 393-399,

## Beschreibung

Die Erfindung betrifft ein Verfahren zur biologischen Abwasserreinigung gemäß dem Oberbegriff des Anspruchs 1 sowie eine Vorrichtung zur Durchführung des Verfahrens gemäß dem Oberbegriff des Anspruchs 9.

Beim konventionellen Belebungsverfahren wird die Reinigungsleistung in einem Belebungsbecken durch Belebtschlamm (Bakterienschlamm) erbracht. Um aktive Biomasse in dem Belebungsbecken anzureichern, wird der in einem Nachklärbecken gravimetrisch eingedickte Belebtschlamm mit einem Rücklaufverhältnis von bis zu 150 % bezogen auf die mittlere Trockenwassermenge in das Belebungsbecken zurückgepumpt. Hierdurch ergibt sich im Belebungsbecken ein Trockensubstanz- Gehalt TS_{BB} von ca. 3 bis 4 g/l. Dies beschränkt die Leistung der Abwasserreinigungsanlage und erhöht die hydraulische Belastung von Belebungs- und Nachklärbecken. Weiterhin ist ein hoher Einsatz an Energie für das Pumpen erforderlich.

Beim Kaskadenverfahren sind zwar in Teilbereichen des Belebungsbeckens höhere TS_{BB} zu erzielen, der mittlere Trockensubstanz- Gehalt ist aber nur unwesentlich höher.

Der Einsatz von Lamellenabscheidern z.B. im Ablauf des Belebungsbeckens hat sich nicht bewährt, weil hierbei wie bei Absetzbecken lediglich die Schwerkraft wirkt und weil die Abfuhr des eingedickten Schlamms problematisch ist.

Eine andere bekannte Möglichkeit zur Anreicherung von Belebtschlamm bietet das Membranbelebungs- Verfahren. Hierbei ist in einem Belebungsbecken oder in einem abgetrennten Filtrationsbecken mindestens eine Filtermembran angeordnet. Um Verstopfungen zu vermeiden, dürfen die Poren dieser Filtermembran eine Höchstgröße von 0,4 µm, besser 0,1 µm nicht überschreiten. Weiterhin ist es erforderlich, dass an der Filtermembran eine ausreichende Strömung aufrecht erhalten wird, damit die Bildung einer Deckschicht auf der Membran minimiert wird. Aufgrund der Porengröße ist das abfließende Wasser frei von ungelösten Stoffen. Daher ist einerseits eine gute Aufkonzentrierung des Belebtschlamms möglich. Andererseits soll der Trockensubstanz- Gehalt an der Filtermembran einen Wert von circa 12 g/l nicht überschreiten. Daher ist insgesamt der Feststoffgehalt im Belebungsbecken nach oben begrenzt. Es muss eine hohe Strömungsgeschwindigkeit und im Fall eines abgetrennten Filtrationsbeckens eine hohe Rezirkulationsrate aufrecht erhalten werden; dies führt dazu, dass durch Kurzschlussströmungen auch ungereinigtes Abwasser an die Filtermembran gelangt, was zu vorzeitigem Fouling führen kann. Weiterhin muss Überschussschlamm separat ausgeschleust werden.

Aus der WO 2004/002604 ist ein Rechen bekannt, bei dem umlaufende Siebelemente stufenförmig angeordnet sind. An einer oberen Umlenkwalze sind Düsen zur Reinigung der Siebelemente angeordnet. Der Rechen ist nicht zur Anreicherung von Belebtschlamm in einem Belebungsbecken geeignet. Der Einsatz in einem Belebungsbecken ist nicht erwähnt.

Die DE 197 27 984 A1 beschreibt eine Vorrichtung zur Entfernung von Schwimmschlamm aus einem Abwasser- Reinigungsbecken, bei der ein umlaufendes Entwässerungsband so zu der Wasseroberfläche in dem Reinigungsbecken geführt ist, dass es geringfügig in das Wasser eintaucht. Mit der Vorrichtung soll auf der Wasseroberfläche schwimmendes Material abgetragen werden. Zur Erhöhung der biologischen Reinigungsleistung in einem Belebungsbecken ist die Vorrichtung nicht geeignet.

Das Dokument *"*Stabilization of Activated Sludge Processes During Wet Weather Flow Through Microscreening", K.-D. Kummer und W.F. Geiger, Wat. Sci. Tech. Vol. 29, No. 1-2, pp. 393-399, 1994, beschreibt eine Vorrichtung und ein Verfahren wobei Abwasser in einem Belebungsbecken mit Belebtschlamm vermischt wird und ein Teil des ablaufenden Abwasser-Belebtschlamm-Gemischs einer Fest-Flüssig-Trennung unterworfen wird.

Aufgabe der Erfindung ist es, ein Verfahren zur biologischen Abwasserreinigung zu schaffen, das eine hohe Effektivität bei relativ geringem Energieeinsatz ermöglicht. Eine weitere Aufgabe ist die Schaffung einer Vorrichtung zur Durchführung des Verfahrens.

Die erste Aufgabe ist durch die Merkmale des Anspruchs 1 gelöst. Dadurch dass in einem Auslauf des Belebungsbeckens das gesamte ablaufende Abwasser- Belebtschlamm- Gemisch einer unvollständigen Fest- Flüssig- Trennung durch Sieben unterworfen wird und dass eine abgetrennte feste Phase in dem Belebungsbecken verbleibt, während eine flüssige Phase abgeleitet wird, kann ein sehr hoher Trockensubstanz- Gehalt im Belebungsbecken eingestellt werden. Hierdurch wird eine sehr hohe Abbauleistung erzielt, so dass ein optimaler Wirkungsgrad bei relativ geringem Volumen des Belebungsbeckens erreicht wird. Gleichzeitig wird eine Nachklärung oder eine Membranfiltration entlastet, weil kein oder nur wenig Rücklaufschlamm im Kreislauf gefahren werden muss und/oder weil erheblich weniger Feststoff an die Membranen gelangt. Entsprechend den örtlichen Erfordernissen ist es auch möglich, die Fest- Flüssig- Trennung so einzustellen, dass nur eine Erhöhung der Trockensubstanz im Belebungsbecken bei gleicher Belastung der Nachklärung oder nur eine Entlastung der Nachklärung bei gleichem Trockensubstanz- Gehalt in der Belebung erzielt wird. Beliebige Zwischeneinstellungen sind einstellbar.

Besonders vorteilhaft ist die Erfindung bei problematischen Schlämmen einzusetzen. Dazu zählen Schlämme mit voluminösen Schlammstrukturen wie z.B. Blähschlamm oder Schlämme mit Feststoffanteilen, die zu Verzopfungen neigen oder einen hohen Faserstoffgehalt aufweisen. Denn hierbei können diese Problemstoffe abgetrennt und ausgeschleust werden, während sie bei den bekannten Verfahren angereichert werden.

Dabei ist das Verfahren betriebssicher, weil eine unvollständige Fest- Flüssig- Trennung aufgrund der im Vergleich zu einer Membran großen Trenngröße nicht zu Verstopfungen neigt. Das Verfahren ist einfach für bestehende Abwasserreinigungs- Verfahren nachrüstbar, so dass eine kostspielige Kläranlagenerweiterung vermieden wird.

Die Unteransprüche betreffen die vorteilhafte Ausgestaltung der Erfindung.

Eine Siebung die so ausgelegt ist, dass ein Teil der Feststoffe mit der flüssigen Phase abgeleitet wird, ist einfach und betriebssicher durchführbar. Hierbei lässt sich ein wesentlicher Anteil des Belebtschlamms zurückhalten.

Wenn eine Menge der mit der flüssigen Phase abgeleiteten Feststoffe einer mittleren Überschussschlamm- Menge entspricht, muss kein Rücklaufschlamm gepumpt sondern nur Überschussschlamm ausgeschleust werden.

Beim Belebungsvertahren oder beim Membranbelebungs- Verfahren ist die Erfindung besonders vorteilhaft einsetzbar.

Mit einem Trockensubstanzgehalt im Belebungsbecken von 3 bis 8 g/l für konventionelle Belebungsverfahren beziehungsweise von 8 bis 20 g/l, vorzugsweise von 10 bis 15 g/l für Membranbelebungs- Verfahren, wird eine hohe Leistungsdichte erzielt, ohne dass es zu Problemen bei der Belüftung kommt.

In einem Nachklärbecken werden auf einfache und effektive Weise die in der flüssigen Phase verbliebenen Feststoffe abgeschieden.

Die zweite Aufgabe ist durch die Merkmale des Anspruchs 9 gelöst. Die Vorteile gelten entsprechend dem Verfahren.

Die Erfindung wird anhand des in der Zeichnung schematisch dargestellten Ausführungsbeispiels weiter erläutert. Es zeigen
Figur 1 ein Schema des erfindungsgemäßen Verfahrens am Beispiel eines konventionellen Belebungsverfahrens,
Figur 2 ein endloses Siebband als Beispiel für eine Vorrichtung zur Fest- Flüssig- Trennung,
Figur 3 ein Schema des Verfahrens am Beispiel eines Membran- Belebungsverfahrens und
Figur 4 ein Diagramm zur Abhängigkeit der hierbei erforderlichen Rücklaufmenge.

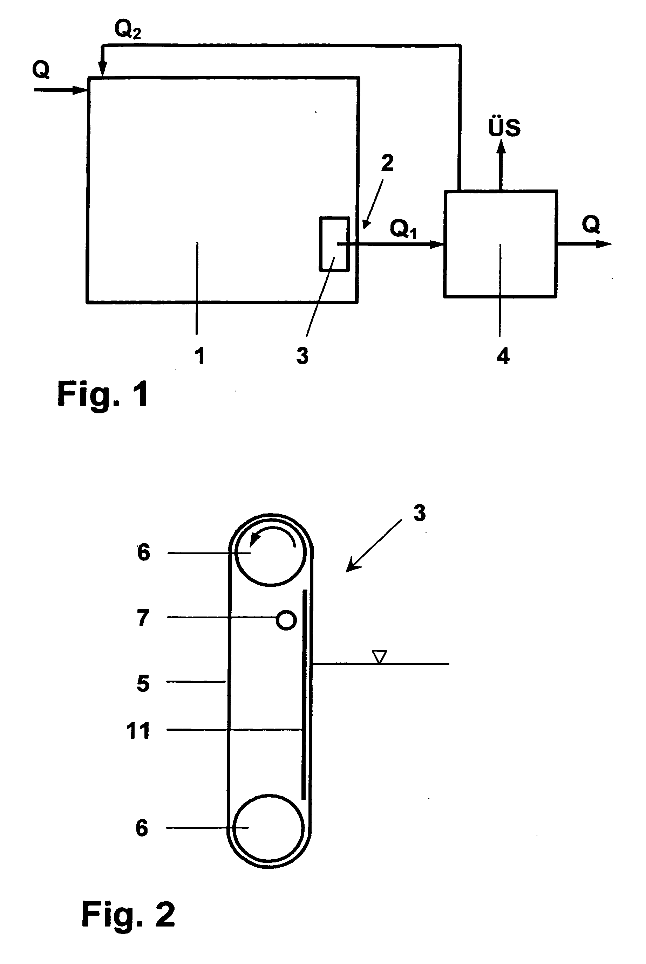

Wie aus der Figur 1 ersichtlich wird ein Abwasserstrom Q kontinuierlich in ein Belebungsbecken 1 eingeleitet und hier mit einem Abwasser- Belebtschlamm- Gemisch für eine bestimmte mittlere Aufenthaltszeit intensiv vermischt. Gleichzeitig wird das Gemisch belüftet, wodurch gelöste Stoffe biologisch abgebaut werden. Die Mittel zum Durchmischen und zum Belüften sind nicht dargestellt. Dem Belebungsbecken 1 ist ein Nachklärbecken 4 nachgeschaltet. Von hier wird gegebenenfalls Rücklaufschlamm Q₂ im Kreislauf zurück zum Belebungsbecken 1 gepumpt.

In einem Auslauf 2 des Belebungsbeckens 1 ist eine Vorrichtung 3 zur unvollständigen Fest- Flüssig- Trennung so angeordnet, dass hier die gesamte ablaufende Gemisch- Menge Q₁ (= Q + Q₂) behandelt wird. Die Vorrichtung 3 umfasst in diesem Beispiel nach Figur 2 ein endloses Siebband 5, das um zwei horizontale, senkrecht übereinander angeordnete Walzen 6 geführt ist. Eine der Walzen 6 ist derart antreibbar, dass das Siebband 5 an einem dem Belebungsbecken 1 zugewandten Trum aufsteigt. Für diesen Trum ist oberhalb des Wasserspiegels im Belebungsbecken 1 eine Reinigungsvorrichtung 7 angeordnet, z.B. eine Wasserleitung mit entsprechenden Reinigungsdüsen. Das Siebband 5 ist z.B. ein Gewebe aus Metall oder Kunststoff mit einer Maschenweite von 0,1 bis 1,0 mm und ist am aufsteigenden Trum durch z.B. ein Lochblech 11 gegen den anstehenden Wasserdruck abgestützt.

Im Betrieb wird der Abwasserstrom Q in das Belebungsbecken 1 geleitet und hier belüftet sowie mit Belebtschlamm vermischt. Hierbei wird das Abwasser biologisch durch Mikroorganismen - ausgedrückt als Trockensubstanz- Gehalt TS_{BB} - gereinigt. Das gereinigte Abwasser- Belebtschlamm- Gemisch Q₁ fließt zum Auslauf 2, wo durch das Siebband 5 der größte Teil des Belebtschlamms abgetrennt und somit im Belebungsbecken 1 zurückgehalten wird. Die flüssige Phase mit einem Rest an Feststoffen fließt durch das Siebband 5 in das Nachklärbecken 4 ab. Aufgrund der vollen Durchmischung im Belebungsbecken 1 wird der abgetrennte Belebtschlamm hier schnell und effektiv verteilt. Auf diese Weise wird einerseits in dem Belebungsbecken 1 ein hoher Trockensubstanz- Gehalt TS_{BB} von 4 bis 8 g/l eingestellt, was eine entsprechend hohe Reinigungsleistung pro Raumeinheit des Belebungsbeckens 1 zu Folge hat. Hierfür muss je nach Abtrennleistung und gewähltem TS_{BB} kein oder nur wenig Rücklaufschlamm Q₂ im Kreislauf gefahren werden, wodurch die Belebung und die Nachklärung entsprechend hydraulisch entlastet werden. Andererseits wird weniger Feststoff zur Nachklärung 4 geleitet, was insbesondere in Verbindung mit der hydraulischen Entlastung zu besseren Absetzeigenschaften des Schlamms führt und so ein insgesamt wenig belasteter Ablauf der Kläranlage erzielt wird.

Das Siebband 5 wird kontinuierlich angetrieben. Hierbei setzen sich die Feststoffe des aus dem Belebungsbecken abfließenden Gemischs Q₁ zu einem überwiegenden Teil an der Oberfläche des Siebbands 5 ab und werden hiervon durch die im Belebungsbecken 1 vorhandenen Turbulenzen und durch die Reinigungsvorrichtung 7 abgelöst. Die Reinigungsvorrichtung 7 ist ebenfalls kontinuierlich in Betrieb und spritzt Flüssigkeit - z.B. gereinigtes Abwasser - gegen die Innenseite des aufsteigenden Trums.

Eine diskontinuierliche oder quasikontinuierliche Betriebsweise des Siebbands 5 und der Reinigungsvorrichtung 7 ist alternativ einstellbar.

Im Nachklärbecken 4 wird der in der flüssigen Phase verbliebene Feststoff durch Schwerkraft weitestgehend abgetrennt und als Überschussschlamm ÜS entsorgt. Falls erforderlich wird ein Teil des Feststoffs als Rücklaufschlamm Q₂ in das Belebungsbecken zurück gepumpt, wobei die Rücklaufschlammmenge Q₂ wesentlich geringer ist als beim konventionellen Belebungsverfahren ohne die erfindungsgemäße Schlammrückhaltung. Im Idealfall, der durch Auswahl einer entsprechenden Maschenweite des Siebbands 5 eingestellt werden kann, entspricht der in der flüssigen Phase verbliebene Feststoff der Überschussschlamm- Menge ÜS, so dass kein Rücklaufschlamm Q₂ gepumpt werden muss und der gesamte dem Nachklärbecken 4 zugeführte Feststoff eingedickt als überschussschlamm ÜS abgezogen wird.

Gegebenenfalls wird in den zulauf zum Nachklärbecken 4 ein Flockungs- und/oder Fällmittel zudosiert, um das Absetzverhalten zu verbessern und/oder gelöste Problemstoffe wie z.B. Phosphor abzuscheiden.

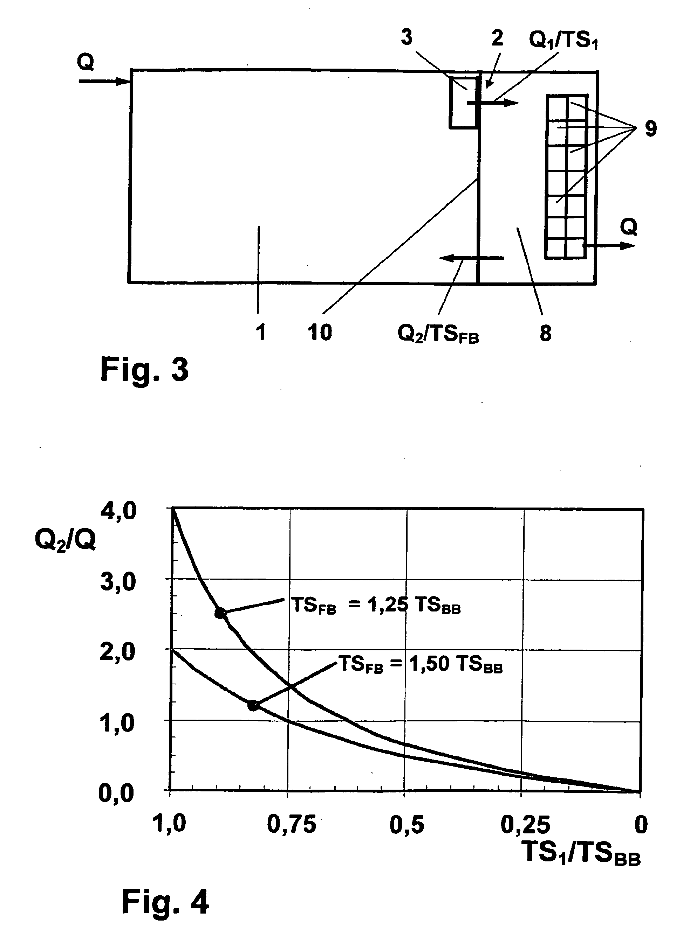

Bei einem anderen Ausführungsbeispiel gemäß Figur 3 wird die Erfindung bei einem Membranbelebungs- Verfahren eingesetzt. Das Abwasser wird in das Belebungsbecken 1 eingeleitet, an das sich unmittelbar ein Filtrationsbecken 8 anschließt. Idealerweise sind das Belebungsbecken 1 und das Filtrationsbecken 8 in einem Becken vereint, wobei sie durch z.B. eine Trennwand 10 unterteilt sind. In dem Filtrationsbecken 8 ist eine Vielzahl von Membranmodulen 9 angeordnet, deren Membranen durchlässig für Flüssigkeit und undurchlässig für ungelöste Stoffe sind. Die Porengröße der Membranen beträgt z.B. 0,1 bis 0,4 µm.

In die Trennwand 10 ist in der Nähe eines beckenseitigen Endes der Auslauf 2 aus dem Belebungsbecken 1 in das Filtrationsbecken 8 eingelassen. An dem Auslauf 2 ist die Vorrichtung 3 zur unvollständigen Fest- Flüssig- Trennung so angeordnet, dass hier die gesamte ablaufende Gemisch- Menge Q₁ behandelt wird. Weiterhin ist in die Trennwand 10 in der Nähe des dem Auslauf 2 gegenüberliegenden Endes eine Öffnung für einen Rücklauf Q₂ eingelassen.

Der Betrieb des Membranbelebungs- Verfahrens erfolgt wie oben für das Belebungsverfahren beschrieben mit folgenden Unterschieden:
Die flüssige Phase mit einem Rest an Feststoffen fließt durch das Siebband 5 in das Filtrationsbecken 8 ab. Hier werden die restlichen Feststoffe vollständig so abgeschieden, dass sie sich hier anreichern. Die flüssige Phase wird als gereinigtes Abwasser abgeleitet und gegebenenfalls nachbehandelt. Damit eine zu hohe Konzentration an Feststoffen im Filtrationsbecken 8 mit den bekannten Nachteilen vermieden wird, muss hier eine Verdünnung erfolgen. Dies wird durch einen Rücklauf Q₂ in das Belebungsbecken 1 erreicht, so dass einerseits eine Erhöhung des Trockensubstanz- Gehalts TS_{BB} im Belebungsbecken 1 und andererseits die Verdünnung im Filtrationsbecken 8 auf den gewünschten Trockensubstanz- Gehalt TS_{FB} erfolgt. Es wird also Abwasser- Belebtschlamm- Gemisch im Kreislauf gefahren. Wie aus der Figur 4 deutlich wird, ist hierbei die erforderliche Rücklaufmenge Q₂ bei sonst gleichen Bedingungen stark abhängig von dem Trockensubstanz- Gehalt TS₁ des dem Filtrationsbecken 8 zufließenden Gemisches und damit von dem Abscheidegrad der Vorrichtung 3 zur unvollständigen Fest- Flüssig- Trennung. Je höher hier der Abscheidegrad ist, desto niedriger ist die erforderliche Rücklaufmenge Q₂. So wird z.B. für ein übliches TS_{FB}/TS_{SB} - Verhältnis von 1,25 und einen Abscheidegrad des Siebbands von 50 % die erforderliche Rücklaufmenge Q₂ auf deutlich weniger als ein Viertel der ohne Abscheidung erforderlichen Rücklaufmenge Q₂ reduziert. Damit wird einerseits Pumpenergie eingespart. Andererseits wird die Entstehung von Kurzschlussströmungen zumindest verringert, so dass die Gefahr des Kurzschlusses von ungereinigten Abwasseranteilen und somit auch eines vorzeitigen Foulings der Membranen vermieden wird.

## Patentansprüche

1. Verfahren zur biologischen Abwasserreinigung,
wobei Abwasser in einem Belebungsbecken (1) mit Belebtschlamm vermischt wird und wobei eine in dem Belebungsbecken (1) vorhandene Konzentration des Belebtschlamms durch Anreicherung auf einen vorbestimmten Wert eingestellt wird, **dadurch gekennzeichnet, dass** in einem Auslauf (2) innerhalb des Belebungsbeckens (1) das gesamte ablaufende Abwasser- Belebtschlamm- Gemisch einer unvollständigen Fest-Flüssig- Trennung durch Sieben unterworfen wird
und dass eine abgetrennte feste Phase in dem Belebungsbecken (1) verbleibt, während eine flüssige Phase einschließlich einem Rest an Feststoffen abgeleitet wird.

2. Verfahren nach Anspruch 1, **dadurch gekennzeichnet, dass** die Fest- Flüssig- Trennung durch Sieben erfolgt, wobei das Sieben so ausgelegt ist, dass ein Teil der ungelösten Stoffe mit der flüssigen Phase abgeleitet wird.

3. Verfahren nach Anspruch 1 oder 2, **dadurch gekennzeichnet, dass** das Sieben so ausgelegt ist, dass eine Menge der mit der flüssigen Phase abgeleiteten Feststoffe einer mittleren Überschussschlamm- Menge entspricht.

4. Verfahren nach einem der Ansprüche 1 bis 3, **dadurch gekennzeichnet, dass** es ein konventionelles Belebungsverfahren ist.

5. Verfahren nach Anspruch 4, **dadurch gekennzeichnet, dass** in dem Belebungsbecken (1) ein Trockensubstanzgehalt (TS_{BB}) von 4 bis 8 g/l eingestellt wird.

6. Verfahren nach Anspruch 4 oder 5, **dadurch gekennzeichnet, dass** die flüssige Phase in ein Nachklärbecken (4) geleitet wird.

7. Verfahren nach einem der Ansprüche 1 bis 3, **dadurch gekennzeichnet, dass** es ein Membran- Belebungs- Verfahren ist.

8. Verfahren nach Anspruch 7, **dadurch gekennzeichnet, dass** in dem Belebungsbecken (1) ein Trockensubstanzgehalt (TS_{BB}) von 8 bis 20 g/l eingestellt wird, vorzugsweise von 10 bis 15 g/l.

9. Vorrichtung zur biologischen Abwasserreinigung,
mit einem Belebungsbecken (1), das einen Zufluss und einen Auslauf (2) aufweist, **dadurch gekennzeichnet, dass** dem Auslauf (2) innerhalb des Belebungsbeckens (1) eine Vorrichtung (3) zur unvollständigen Fest- Flüssig- Trennung mittels Siebband (5) zugeordnet ist.

10. Vorrichtung nach Anspruch 9, **dadurch gekennzeichnet, dass** die Vorrichtung (3) zur Fest- Flüssig- Trennung ein Gewebe umfasst.

11. Vorrichtung nach Anspruch 9 oder 10, **dadurch gekennzeichnet, dass** die Vorrichtung (3) zur Fest- Flüssig- Trennung ein endloses Siebband (5) umfasst.

12. Vorrichtung nach einem der Ansprüche 9 bis 11, **dadurch** gekenntzeichnet, dass das Belebungsbecken (1) ein konventionelles Belebungsbecken ist.

13. Vorrichtung nach Anspruch 12, **dadurch gekennzeichnet, dass** dem Belebungsbecken (1) ein Nachklärbecken (4) nachgeschaltet ist.

14. Vorrichtung nach einem der Ansprüche 9 bis 11, **dadurch gekennzeichnet, dass** das das Belebungsbecken (1) ein Membran- Belebungs- Reaktor ist.

## Claims

1. Method for biological wastewater purification, wherein wastewater is mixed in an activated sludge tank (1) with activated sludge, and wherein the concentration of activated sludge in the activated sludge tank (1) is adjusted by enriching to a predetermined value,
**characterised in that** in an outlet (2) inside the activated sludge tank (1) the whole mixture of running wastewater and activated sludge is subjected to an incomplete separation of solids and liquids by screening,
and **in that** a separated solid phase remains in the activated sludge tank (1), whilst a liquid phase is removed including a residue of solids.

2. Method according to claim 1, **characterised in that** the separation of solids and liquids is performed by screening, wherein the screening is set up such that a portion of undissolved substances is removed with the liquid phase.

3. Method according to claim 1 or 2, **characterised in that** the screening is set up so that the amount of solids removed with the liquid phase corresponds to an average amount of excess sludge.

4. Method according to one of claims 1 to 3, **characterised in that** it is a conventional activated sludge method.

5. Method according to claim 4, **characterised in that** the suspended solids (TS_{BB}) in the activated sludge tank is 4 to 8 g/l.

6. Method according to claim 4 or 5, **characterised in that** the liquid phase is conducted into a secondary clarification tank (4).

7. Method according to one of claims 1 to 3, **characterised in that** it is a membrane-activated sludge method.

8. Method according to claim 7, **characterised in that** the suspended solids (TS_{BB}) in the activated sludge tank is 8 to 20 g/l, preferably 10 to 15 g/l.

9. Device for biological wastewater purification, comprising an activated sludge tank (1) with an inlet and an outlet (2), **characterised in that** a device (3) for the incomplete separation of solids and liquids by means of a screening band (5) is assigned to the outlet (2) inside the activated sludge tank (1).

10. Device according to claim 9, **characterised in that** the device (3) for separating the solids and liquids comprises a fabric.

11. Device according to claim 9 or 10, **characterised in that** the device (3) for separating the solids and liquids comprises an endless screening band (5).

12. Device according to one of claims 9 to 11, **characterised in that** the activated sludge tank (1) is a conventional activated sludge tank.

13. Device according to claim 12, **characterised in that** a secondary clarification tank (4) is connected downstream of the activated sludge tank (1).

14. Device according to one of claims 9 to 11, **characterised in that** the activated sludge tank (1) is a membrane-activated sludge reactor.

## Revendications

1. Procédé d'assainissement biologique (1) des eaux usées,
dans lequel les eaux usées sont mélangées dans un bassin d'activation (1) avec des boues activées et
dans lequel une concentration des boues activées présente dans le bassin d'activation (1) est réglée par enrichissement à une valeur prédéterminée,
**caractérisé en ce que**, dans une décharge (2) à l'intérieur du bassin d'activation (1), la totalité du mélange d'eaux usées et de boues activées sortant est soumise à une séparation solides-liquide incomplète par tamisage, et
une phase solide séparée reste dans le bassin d'activation (1), tandis qu'une phase liquide est déchargée avec un résidu de solides.

2. Procédé selon la revendication 1, **caractérisé en ce que** la séparation solides-liquide se fait par tamisage, dans lequel le tamisage est tel qu'une partie des solides non dissous est évacuée avec la phase liquide.

3. Procédé selon la revendication 1 ou 2, **caractérisé en ce que** le tamisage est tel qu'une quantité des solides évacués avec la phase liquide correspond à une quantité moyenne de boues en excès.

4. Procédé selon l'une quelconque des revendications 1 à 3, **caractérisé en ce qu'**il s'agit d'un procédé d'activation classique.

5. Procédé selon la revendication 4, **caractérisé en ce que** l'on règle une teneur en substances sèches (TS_{BB}) de 4 à 8 g/l dans le bassin d'activation (1).

6. Procédé selon la revendication 4 ou 5, **caractérisé en ce que** la phase liquide est acheminée dans un bassin de décantation secondaire (4).

7. Procédé selon l'une quelconque des revendications 1 à 3, **caractérisé en ce qu'**il s'agit d'un procédé d'activation à membrane.

8. Procédé selon la revendication 7, **caractérisé en ce que**, dans le bassin d'activation (1), on règle une teneur en substances sèches (TS_{BB}) de 8 à 20 g/l, de préférence de 10 à 15 g/l.

9. Dispositif d'assainissement biologique des eaux usées,
avec un bassin d'activation (1), qui présente une arrivée et une décharge (2),
**caractérisé en ce qu'**un dispositif (3) de séparation incomplète solides-liquide est affecté à la décharge (2) au moyen d'une bande de tamisage à l'intérieur du bassin d'activation (1).

10. Dispositif selon la revendication 9, **caractérisé en ce que** le dispositif (3) de séparation solides-liquide comprend un tissu.

11. Dispositif selon la revendication 9 ou 10, **caractérisé en ce que** le dispositif (3) de séparation solides-liquide comprend une bande de tamisage sans fin (5).

12. Dispositif selon l'une quelconque des revendications 9 à 11, **caractérisé en ce que** le bassin d'activation (1) est un bassin d'activation classique.

13. Dispositif selon la revendication 12, **caractérisé en ce qu'**un bassin de décantation secondaire (4) est installé en aval du bassin d'activation (1).

14. Dispositif selon l'une quelconque des revendications 9 à 11, **caractérisé en ce que** le bassin d'activation (1) est un réacteur d'activation à membrane.
